**Europäisches Patentamt**

**European Patent Office**

**Office européen des brevets**

(19)

(11) Veröffentlichungsnummer: **0 170 046**
**B1**

(12) **EUROPÄISCHE PATENTSCHRIFT**

(45) Veröffentlichungstag der Patentschrift:
18.05.88

(21) Anmeldenummer: **85107866.7**

(22) Anmeldetag: **25.06.85**

(51) Int. Cl.⁴: **B 29 D 11/00**

(54) Herstellverfahren für kontaktoptische Elemente.

(30) Priorität: **05.07.84 DE 3424706**

(43) Veröffentlichungstag der Anmeldung:
**05.02.86 Patentblatt 86/6**

(45) Bekanntmachung des Hinweises auf die Patenterteilung:
**18.05.88 Patentblatt 88/20**

(84) Benannte Vertragsstaaten:
**DE FR GB**

(56) Entgegenhaltungen:
**BE-A-494 356**
**BE-A-633 067**
**CH-A-261 157**
**GB-A-655 901**
**GB-A-685 759**
**US-A-2 664 025**

(73) Patentinhaber: **Geyer, Otto- Christian, Dr.,
Bahnhofstrasse 12, D-6330 Wetzlar (DE)**

(72) Erfinder: **Geyer, Otto- Christian, Dr.,
Bahnhofstrasse 12, D-6330 Wetzlar (DE)**
Erfinder: **Wingler, Frank, Dr., Walter- Flex- Strasse
17, D-5090 Leverkusen 1 (DE)**
Erfinder: **Born, Anton, Paul- Klee- Strasse 17c,
D-5090 Leverkusen 1 (DE)**

## Beschreibung

Die vorliegende Erfindung betrifft ein Verfahren zur Herstellung von kontaktoptischen Elementen, insbesondere von Sklerallinsen, mittels eines individuellen Negativabdrucks des Patientenauges, gemäß dem Oberbegriff des Anspruchs 1.

Die Bedeutung von Sklerallinsen im kontaktoptischen Anwendungsbereich kann kaum überschätzt werden. Bei angeborenen oder erworbenen extremen Veränderungen der Augenvorderfläche - z. B. Keratokonus, Verätzungen, Windschutzscheibenverletzungen - kann eine wirksame und komfortable Korrektur des Sehvermögens praktisch nur mit Sklerallinsen hergestellt werden. Für bestimmte Personengruppen - z. B. Aphakie nach Operation des Altersstars, Tremorpatienten, Kinder mit starken Fehlsichtigkeiten, Sportler, besonders Schwimmer - sind sie wegen besserer Handhabbarkeit und Sicherheit den Kornealkontaktlinsen vorzuziehen. Nach schweren Augenverletzungen oder bei Albinismus wird durch speziell geformte Sklerallinsen nicht nur die optische Funktion des Auges wiederhergestellt, sondern durch Sklerallinsen mit Iriszeichnung kann man, über die kosmetische Wirkung hinaus, die soziale Rehabilitation des Patienten begünstigen. (Siehe Deutsches Gebrauchsmuster Nr. 7 232 470).

Seit etwa 100 Jahren wird an der Herstellung und Anpassung von Sklerallinsen gearbeitet, und es wurden zahlreiche Herstellverfahren realisiert. Daß dennoch nur ca. 1 % der Verordnungen in der Kontaktoptik auf Sklerallinsen entfallen, hängt neben Verträglichkeitsproblemen wesentlich mit den bis heute noch nicht bewältigten Problemen im Herstellprozeß zusammen. Hierzu gehören zahlreiche manuelle Eingriffe bei der Fertigung, die zu Produktfehlern und hohen Kosten führen, Mängel im Tragekomfort und die Schwierigkeit, ein für den Stoffwechsel der Hornhaut ausreichendes Tränenfilm-Volumen sicherzustellen, das zum einen den nötigen Vorrat an Sauerstoff enthält und zum andern den Transport der Abbauprodukte bewirkt.

Die Anpassung von Sklerallinsen auf die Augenkontur erfolgte bisher mit einem Anpaßsatz bestimmter normierter Innengeometrien der Sklerallinsen oder mittels einer, im Sinne einer optimierten individuellen Anpassung günstieren Methode, durch Fertigung auf thermoplastischem Wege über eine Form, die nach dem Abguß des zu versorgenden Auges hergestellt wurde. Da das letztere Verfahren sich auf die gegebenen individuellen anatomischen Verhältnisse, aber auch auf individuelle Anpaßschwierigkeiten besser abstimmen läßt, diente es als Ansatzpunkt für das erfindungsgemäß verbesserte Verfahren zur Herstellung von Sklerallinsen.

Beim Verfahren des Standes der Technik wird zunächst vom Patientenauge nach an sich bekannten Techniken (siehe M. Ruben: Kontaktlinsenanpassung, Gustav Fischer-Verlag, Stuttgart - Hew York 1978) ein Abdruck genommen. Von diesem wird eine Gegenform hergestellt, über die dann eine Scheibe bestimmter Mittendicke eines transparenten thermoplastischen Materials - bevorzugt PMMA - in einem speziellen Verfahren geformt wird. Nach Abkühlung des thermoplastischen Materials ist diesem die Negativ-Kontur des Patientenauges aufgeprägt.

An dieser Stelle des Herstellungsprozesses beginnt jedoch der eigentliche manuelle Fertigungsaufwand, der Gebrauchseigenschaften, Tragekomfort und Verträglichkeit der Sklerallinsen entscheidend beeinflußt: Da die zur Gewinnung des Augenabdrucks und des Gegenabdrucks eingesetzten Materialien (besonders Gips) infolge ihrer Kornstruktur Porositäten aufweisen, ist auch die Innenfläche des Sklerallinsen-Rohlings genarbt. In Schleif- und Poliervorgängen müssen diese Rauhigkeiten eingeebnet werden.

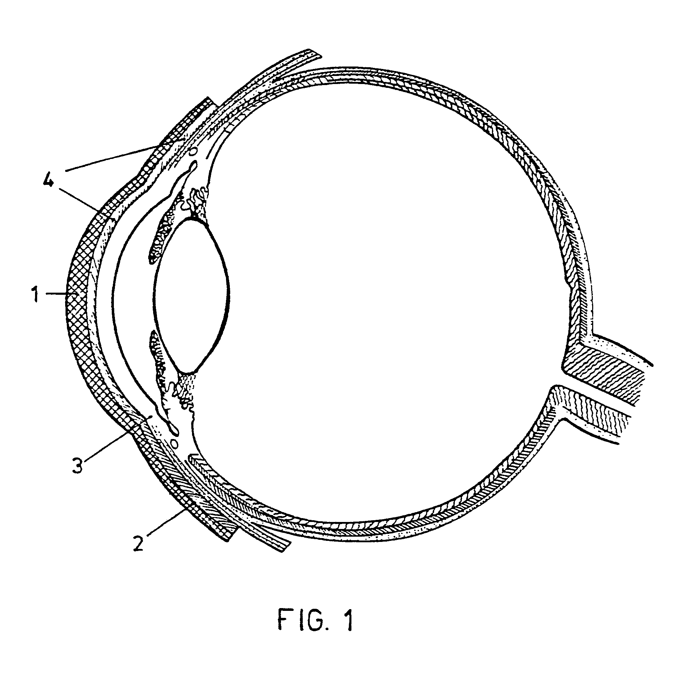

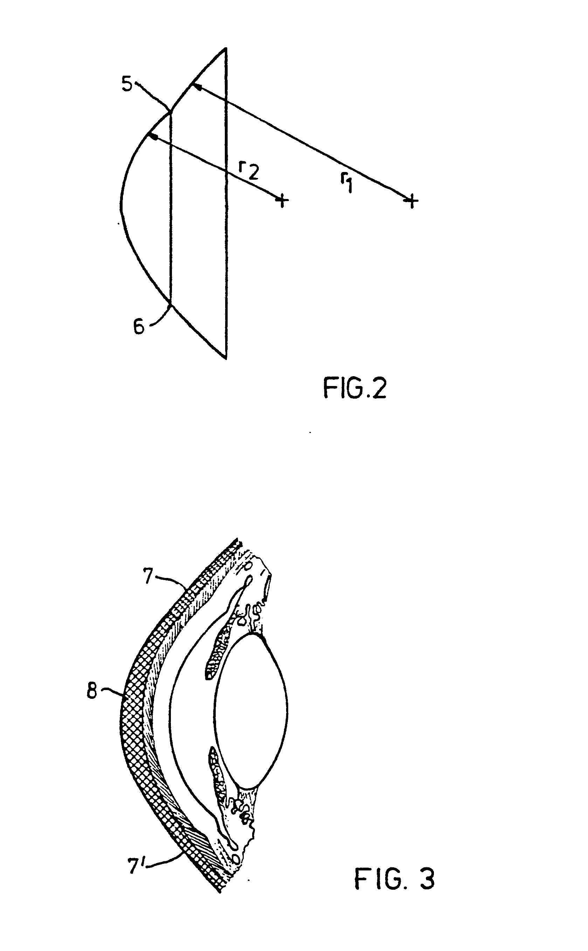

Fig. 1 zeigt einen Querschnitt durch das mit einer Sklerallinse versehene Auge. Man erkennt, daß die Augenvorderfläche aus Abschnitten unterschiedlicher Krümmungsradien besteht, denen auf der Sklerallinse der optische Teil 1 bzw. der haptische Teil 2 entsprechen. Fig. 2 zeigt schematisch die der Augenkontur entsprechende Innenkurve einer Sklerallinse mit den Krümmungsradien $r_1$ und $r_2$. Die beiden verschiedenen Radien treffen in einer verhältnismäßig scharfkantigen ringförmigen Zone 5 aufeinander. Gerade im Bereich dieses Radienüberganges auf der Sklerallinse befindet sich eine sehr empfindliche Zone des Augenvorderabschnittes, der in Fig. 1 dargestellte Limbusbereich 3. Es ist daher erforderlich, in der Sklerallinse eine Übergangszone 6 einzuarbeiten.

Ein weiteres Problem besteht darin, daß man bei guter Formtreue der Abgußkörper und der nachgebildeten Schalen Sklerallinsen enthält, die über weite Bereiche der Augenkontur parallel angepaßt sind mit der Wirkung, daß sich der für den Gasstoffwechsel des Auges erforderliche Tränenflüssigkeitsfilm 4 in nur unzureichender Dicke ausbilden kann. Mit Schleif- und Polierverfahren muß nun die Innenkontur der Sklerallinse so verändert werden, daß im Interesse größerer Tränenfilm-Dicke die Parallelanpassung verlassen wird.

Schließlich erfolgt noch eine spanende Bearbeitung der Außenfläche der Sklerallinse, vor allem, um im Zentral bereich die gewünschte optische Wirkung, im äußeren Bereich ein ungehindertes Gleiten der Lider beim Lidschlag sicherzustellen.

Es ist bekannt, daß die nach spanenden bzw. nach Schleif- und Polierprozessen auf der dem Auge zugewandten Fläche der Sklerallinse verleibenden mikroskopisch feinen Rauhigkeiten und Riefen bevorzugte Anlagerungsplätze von Ablagerungen verschiedenster Art sind, die wiederum Irritationen am Auge verursachen können.

BE-A-633 087 beschreibt ein Verfahren zur Herstellung von Sklerallinsen durch Gießen oder Warmverformen von Kunststoff mit Hilfe einer Matritze, bei dem ausgehend von einem Abdruck des Auges, des nach einem in der Dentaltechik üblichen Verfahren erzeugt wurde, eine Gipsmatritze hergestellt wird, deren Oberfläche zum Ausgleich ihrer Rauheit mit einer dünnen Lackschicht versehen wird, die ein späteres Nachbehandeln der Linse unnötig macht.

Aufgabe der vorliegenden Erfindung war es, ein Fertigungsverfahren anzugeben, bei dem manuelle Eingriffe soweit wie möglich reduziert werden und Sklerallinsen herzustellen, die sich durch folgende Merkmale auszeichnen:

- dem zu versorgenden Auge optimal angepaßte Innenflächen,
- den Tragekomfort entscheidend verbessernde Gestaltung des Limbusbereichs,
- Sicherstellung eines definierten Tränenflüssigkeitsfilms durch gezielte Maßnahmen in der Gestaltung der Innenflächen-Geometrie,
- Vermeidung von spanender Bearbeitung der dem Auge aufliegenden Fläche und damit Realisierungsmöglichkeit für extrem dünne (z. B. 0,2 - 0,4 mm dicke) Sklerallinsen sowie Reduzierung der Neigung zu Ablagerungen aufgrund glatter Innenflächen.

Diese Aufgabe wird durch das erfindungsgemäße Verfahren gelöst.

Gegenstand der Erfindung ist ein Verfahren zur Herstellung von kontaktoptischen Elementen, insbesondere Sklerallinsen, die auf dem Patientenauge einen definierten Tränenflüssigkeitsfilm und eine definierte Radienabflachung im Limbusbereich besitzen, aus einem physiologisch verträglichen thermoplastischen Kunststoff, indem man

- mittels einer Abformmasse einen Negativabdruck des Patientenauges herstellt,
- den Negativabdruck mit einer zu einem wärmeformbeständigen Material aushärtenden Masse ausgießt,
- den Limbusbereich des so erhaltenen Positivabdrucks abflacht und
- durch Tiefziehen des thermoplastischen Kunststoffes über den geglätteten Positivabdruck das kontaktoptische Element formt,

dadurch gekennzeichnet, daß man vor dem Tiefziehen

a) den Positivabdruck mit einem die Poren verschliessenden Lackbindemittel tränkt, danach

b) den Positivabdruck glättet und eine polierbare Lackschicht von ca. 5 - 150 µm Dicke unter Abflachung der Radien in dem dem Limbus entsprechenden Bereich aufbringt und

c) die Lackschicht poliert.

Vorzugsweise wird erfindungsgemäß vor dem Tiefziehen in einem weiteren Schritt

d) der korrigierte und polierte Positivabdruck mit einer wärmeformbeständigen Formmasse dubliert.

Im erfindungsgemäßen Verfahren wird die endgültige Innenfläche der Sklerallinse keiner spanenden Bearbeitung unterworfen, d. h. im Tiefziehprozeß wird auf thermoplastischem Wege die definitive Innenflächengestalt mit hoher Qualität erzielt. Die so erhaltene glatte Innenfläche bietet keine Ansatzmöglichkeiten für Ablagerungen, ermöglicht darüber hinaus infolge ihrer Kontur die Ausbildung eines geschlossenen ausreichend dicken Tränenfilms und entlastet den empfindlichen Limbusbereich. Erfindungsgemäß hergestellte Sklerallinsen weisen demnach hohen Tragekomfort und ausgezeichnete Verträglichkeit auf.

Im ersten Schritt des erfindungsgemäßen Verfahrens zur Herstellung von Sklerallinsen wird zunächst in konventioneller Weise von dem Patientenauge ein Negativabdruck mit einer das Auge nicht reizenden Abdruckmasse, z. B. auf Basis von Alginat, Silikon oder Gelatine genommen. Dieser Negativabdruck wird in einem zweiten Schritt mit einer erstarrenden Formmasse ausgegossen. Als Formmassen kommen insbesondere hydraulisch abbindende Massen, z. B. auf Basis von Gips, Zementen, Metalloxiden oder Silikaten in Frage. Die für die ersten beiden Stufen des erfindungsgemäßen Verfahrens benötigten Abdruck- bzw. Formmassen mit niedrigem Schrumpf sind aus der Augen- und Zahnmedizin an sich bekannt. Eine detaillierte Beschreibung der konventionellen Verfahrensschritte bei der Sklerallinsenherstellung findet sich z. B. in Ruben, "Kontaktlinsenanpassung", Gustav Fischer-Verlag, 1978, S. 175-190.

Das in der zweiten Verfahrensstufe erhaltene Positiv wird getrocknet und mit einem physikalisch trocknenden Lackbindemittel zum Verschließen der Poren getränkt. Als physikalisch trocknende Bindemittel sind insbesondere an sich bekannte polierfähige Lacke auf Basis von Poly(meth)acrylaten, Nitrocellulose, Polyester, Inden/Cumaron-Harzen u. a. geeignet, die bei Raumtemperatur hart und polierbar sind und vorzugsweise eine Glasübergangstemperatur oberhalb von 40°C aufweisen. Nach diesem Verfahrensschritt kann die Oberfläche durch Schleifen oder Polieren geglättet werden, wobei insbesondere Unebenheiten, die von Hornhautnarben herrühren, beseitigt werden.

Im nächsten Verfahrens schritt wird eine weitere Lackschicht definierter Dicke aufgetragen. Die Dicke dieser Lackschicht bestimmt den späteren Abstand der Innenfläche der Sklerallinse von der Augenvorderfläche und damit die Dicke des Tränenflüssigkeitsfilms. Die Schichtdicke beträgt etwa 5 - 150 µm, vorzugsweise 10 - 100 µm. Die Dicke der Lackschicht kann durch Zufügen eines Farbstoffes, insbesondere eines fluoreszierenden Farbstoffes, kontrolliert werden. Im Grenzbereich zwischen den einzelnen Krümmungsradien $r^1$ und $r^2$ (siehe Fig. 2) wird durch einen dickeren Lackauftrag eine Abflachung der späteren Sklerallinse im Limbusbereich bewirkt. Als Lacke kommen die oben- genannten physikalisch trocknenden Bindemittel sowie thermisch, insbesondere aber auch durch Strahlung vernetzende Bindemittel in Frage. Geeignete thermisch vernetzende Lacke sind z. B. solche auf Basis von Poly(meth)acrylaten, Polyester, Polyaromaten mit thermisch aushärtenden Gruppen, wie z. B. Methylol-, Epoxid-, Carboxyl- oder Hydroxyl-Gruppen. Geeignet sind auch thermisch vernetzende Bindemittelsysteme auf Basis von Polyisocyanaten in Kombination mit Polyolen. Durch Strahlen vernetzende Bindemittel tragen ungesättigte Gruppen, insbesondere end- oder seitenständige Acryl- oder Methacryl-Gruppen. Sie vernetzen bei Einwirkung von Elektronen- oder Ultraviolettstrahlen.

Nach Aushärten der Lackschichten können diese mit Polierwerkzeugen bearbeitet werden, um gewünschte Korrekturen, Dickeänderungen für den Tränenfilm über bestimmte Zonen der Augenkontur u. ä. einzuarbeiten. Ferner können Narben o. ä., die von dem Augenabdruck herrühren, im Sinne einer optimierten und gleichförmigen Sklerallinsen-Innenfläche gezielt entfernt werden. Der so hergestellte, korrigierte Positivabdruck des Patientenauges kann nach herkömmlichen Methoden dubliert werden. Hierzu wird ein Präzisionsabdruck, bevorzugt mit einer Dental-Silikon-Abdruckpaste, abgenommen und dieser mit einer erhärtenden Formbaumasse, bevorzugt einem gefüllten Epoxid-Harz, ausgegossen.

Der (gegebenenfalls dublierte) Positivabdruck dient als Matrize für den folgenden Tiefziehvorgang. Hierzu werden etwa 0,2 - 4 mm dicke Platten aus einem physiologisch mit dem Auge verträglichen optischen Thermoplasten oberhalb ihrer Erweichungstemperatur über den korrigierten Positivabdruck bzw. über den dublierten Abdruck mit Hilfe von Überdruck oder Vakuum tiefgezogen. Geeignete Materialien sind z. B. gegossene Acrylgläser auf Basis von Methylmethacrylat oder Copolymerisaten aus Methylmethacrylat mit weiteren Methacrylsäureestern, Celluloseacetobutyrat und transparente, nicht kristallisierende Polyamide, inbesondere aus aliphatischen oder cycloaliphatischen Polyaminen in Kombination mit aromatischen oder cycloaliphatischen bzw. aliphatischen Polycarbonsäuren.

Das Ergebnis dieses Tiefziehvorganges ist eine Sklerallinse, deren Innenfläche eine Kontur aufweist, die ohne weitere Nacharbeit die Ausbildung eines definierten, geschlossenen Tränenfilmes ermöglicht, die den empfindlichen Limbusbereich entlastet und bei der infolge der hohen Oberflächenqualität die Neigung zu Ablagerungen minimiert ist.

Nach dem Tiefziehprozeß können der Sitz des Sklerallinsen-Rohlings und die Ausbildung des Tränenfilmes geprüft werden. Falls diese Tests erfolgreich ausfallen, wird die Außenfläche der Sklerallinse in der zentralen Zone bearbeitet, um die gewünschte optische Wirkung zu erreichen.

Bei Bedarf kann auch der äußere Bereich (Haptik) der Außenfläche nachgearbeitet werden.

Fig. 3 zeigt einen Querschnitt durch ein Auge, dem eine erfindungsgemäß hergestellte Sklerallinse 8 angepaßt wurde. Man erkennt, daß die Linse in den Limbusbereichen 7,7' keine scharfkantigen Konturen aufweist.

Gemäß einer Variante des erfindungsgemäßen Verfahrens kann man nachträglich im mittleren Teil der Außenfläche, d. h. im Bereich der optischen Wirksamkeit, eine dickere Schicht durch Aufpolymerisieren von z. B. Polymethylmethacrylatsirup oder durch Aufkleben von Polymethylmethacrylat erzeugen, um genügend Material für die zentrale Bearbeitung der optischen Fläche zu besitzen.

Ein besonderer Vorteil des erfindungsgemäßen Verfahrens ist es, daß man Sklerallinsen aus sehr dünnem Material, z. B. 0,2 - 0,5 mm Wandstärke, herstellen und ihren Sitz überprüfen kann.

Es versteht sich, daß erfindungsgemäß hergestellte Sklerallinsen wegen der guten Anpassung an die Augengeometrie und möglicher Gewichtsreduzierung mit Dicken bis zu 0,2 mm hohen Tragekomfort und gute Verträglichkeit bieten. In noch höherem Maße gilt dies für Patienten mit problematischer Augenkontur, wie sie bei Keratokonus oder traumatisch deformierten Augen auftreten.

Da man, wie erwähnt, bestrebt ist, im Interesse eines hohen Tragekomforts die für den Tiefziehvorgang erforderlichen Platten möglichst dünn zu gestalten, um geringes Gewicht der Sklerallinse zu erzielen, können Probleme auftreten, wenn man wegen der erforderlichen optischen Korrektion hohe Dioptrien-Werte erreichen muß. Die Materialdicke ist dann vielfach zu gering, als daß man beim Bearbeiten der Außenfläche der Sklerallinse noch die gewünschte optische Wirkung erzielen kann.

Um den Vorteil des Tragekomforts sehr dünner Sklerallinsen mit der optischen Korrektion hoher Dioptrien-Werte zu kombinieren, kann man deshalb auf der Außenfläche des tiefgezogenen Sklerallinen-Rohlings einen Formkörper aufkitten, der als Innenradius den Außenradius des Sklerallinsen-Rohlings besitzt. In einem weiteren Arbeitsgang wird dann nach an sich bekannten mechanischen Dreh- und Polierverfahren die optische Korrektion durch Bearbeitung des aufgekitteten Formkörpers erzeugt.

Dieser aufzukittende Formkörper kann auch eine fertig bearbeitete Linse - beispielsweise eine Kontaktlinse - sein, deren Dimensionen bei Innenradius = Außenradius des Sklerallinsen-Rohlings die gewünschte optische Korrektion der Sklerallinse ergeben. In diesem Falle beschränkt sich die nachfolgende Bearbeitung auf eine Glättung des Übergangsbereichs zwischen Sklerallinse und aufgekitteter Linse.

Im Falle von Irisverletzungen ist es oft erforderlich, aus kosmetischen Gründen eine Irisstruktur in die Sklerallinse zu implantieren. Diese Implantation erfolgt zweckmäßigerweise bevorzugt in die Kittschicht zwischen Sklerallinsen-Rohling und aufzukittendem Formkörper.

Die oben beispielhaft für Sklerallinsen geschilderten Verhältnisse und Herstellverfahren sind entsprechend auch auf andere Elemente der Kontaktoptik, besonders Kontaktlinsen, übertragbar. Auch hier sind die entscheidenden Vorteile des erfindungsgemäßen Verfahrens die Anpassung an die individuelle Augenkontur, die Sicherstellung eines für den Gasstoffwechsel des Auges bzw. einzelner Partien des Auges hinreichenden Tränenfilms und der Verzicht auf jegliche spanende Bearbeitung der dem Auge aufliegenden Fläche des kontaktoptischen Elementes.

**Beispiel**

Von einem Patientenauge wird ein Abdruck mit einer Dental-Alginat-Abdruckpaste (z. B. Alginoplast® der Bayer AG) angefertigt und dieser unmittelbar mit einer im Vakuum entgasten Mineral-Hartgips/Wasser-Aufschlämmung ausgegossen. Nach Erstarren der Gipsmasse wird das Gipspositiv aus dem Alginatabdruck entnommen und an der Luft getrocknet. Der Gipsknopf wird in eine handelsübliche 20-proz. Nitrocelluloselack-Lösung (in Butylacetat) getaucht und der an der Oberfläche haftende Lackfilm abgeschleudert. Nach Trocknen des vom Gipsknopf aufgesogenen Lackes wird die Oberfläche mit einem Feinschmirgelpulver trocken geglättet; eventuelle Erhebungen, die von Narben herrühren, werden dabei abgetragen. Nun wird auf dem geglätteten Gipsmodell eine weitere Nitrocelluloselackschicht durch Tauchen in eine mit einem UV-Fluoreszenzfarbstoff versehene 10-%-ige Lösung von Nitrocellulose in Äthylglykolacetat aufgebracht und durch Drehen gleichmäßig verteilt. Zur Abflachung der Radien in dem Bereich des Limbus wird das Modell zum zweiten Mal bis zu dem dem Limbus entsprechenden Bereich durch Tauchen mit einer Lackschicht versehen. Nach dem Trocknen wird der Lackfilm auf die gewünschte Schichtdicke der einzelnen Zonen abgeschliffen und poliert, wobei der Fluoreszenzfarbstoff als Indikator für die Schichtdicke dient. Bei diesem Vorgang wird dafür gesorgt, daß die Radien abgeflacht werden, so daß im Bereich des Limbus der Lackfilm eine Dicke von etwa 60 - 100 µm, im Bereich der Hornhaut von ca. 30 µm und im äußeren Bereich eine Dicke von ca. 10 µm besitzt. Das korrigierte Modell wird mit einer Präzisions-Dental-Silikonmasse (z. B. Xantopren® der Bayer AG) abgeformt und die Silikonmasse mit einer Dental-Zweikomponenten-Epoxid-Gußmasse (z. B. RMP Epoxid 202 der Fa. Reichelt Chemietechnik, Heidelberg) ausgegossen. Die Epoxidmasse wird 4 Stunden bei Raumtemperatur gelagert und anschließend über Nacht bei 80° C ausgehärtet. Über das auf diese Weise erhaltene Epoxid-Modell wird eine vorher auf 130° C erwärmte gegossene Acrylglasplatte im Format 5 x 5 cm und mit einer Schichtdicke von 0,5 mm in einer Vakuumtiefziehapparatur unter Zuhilfenahme eines Heißluftgebläses geformt. Um eine genügende Materialdicke zum Aufdrehen der Scheitelbrechwerte zu erhalten, wird auf die Vorderseite ein dünnes Acrylglasplättchen mit einem handelsüblichen, unter UV-Licht aushärtenden Acrylglaskleber aufgesetzt. An der Außenfläche werden dann nach herkömmlichen Techniken die gewünschten Scheitelbrechwerte erzeugt. Die Innenfläche der Sklerallinse bedarf keiner weiteren Bearbeitung.

**Patentansprüche**

1. Verfahren zur Herstellung von kontaktoptischen Elementen, insbesondere Sklerallinsen, die auf dem Patientenauge einen definierten Tränenflüssigkeitsfilm und eine definierte Radienabflachung im Limbusbereich besitzen, aus einem physiologisch verträglichen thermoplastischen Kunststoff, indem man
- mittels einer Abformmasse einen Negativabdruck des Patientenauges herstellt,
- den Negativabdruck mit einer zu einem wärmeformbeständigen Material aushärtenden Masse ausgießt,
- den Limbusbereich des so erhaltenen Positivabdrucks abflacht und
- durch Tiefziehen des thermoplastischen Kunststoffes über den geglätteten Positivabdruck das kontaktoptische Element formt,
dadurch gekennzeichnet, daß man vor dem Tiefziehen
a) den Positivabdruck mit einem die Poren verschließenden Lack tränkt, danach
b) den Positivabdruck glättet und eine polierbare Lackschicht von ca. 5 - 150 µm Dicke zur Abflachung der Radien in dem dem Limbus entsprechenden Bereich aufbringt und
c) die Lackschicht poliert.
2. Verfahren nach Anspruch 1, dadurch gekennzeichnet, daß man vor dem Tiefziehen in einem weiteren Schritt
d) den korrigierten und polierten Positivabdruck mit einer wärmeformbeständigen Formmasse dubliert.
3. Verfahren nach Anspruch 1 oder 2, dadurch gekennzeichnet, daß die Stärke des Sklerallinsen-Rohlings 0,2 - 0,5 mm beträgt.
4. Verfahren nach den Ansprüchen 1 bis 3, dadurch gekennzeichnet, daß man nach dem Tiefziehen auf der Außenfläche des Sklerallinsen-Rohlings eine Schicht Kunststoffmaterial für die Bearbeitung des optisch wirksamen Bereichs der Linse aufbringt.
5. Verfahren nach Anspruch 4, dadurch gekennzeichnet, daß man einen Formkörper aufkittet, dessen Innenradius dem Außenradius des Sklerallinsen-Rohlings entspricht.
6. Verfahren nach Anspruch 5, dadurch gekennzeichnet, daß der Formkörper eine fertig bearbeitete Linse, vorzugsweise eine Kontaktlinse ist.

7. Verfahren nach den Ansprüchen 4 bis 6, dadurch gekennzeichnet, daß man zwischen Außenfläche des Sklerallinsen-Rohlings und aufgebrachter Kunststoffschicht eine Irisstruktur vorsieht.

## Claims

1. Process for the production of contact optical elements, in particular scleral lenses which have a specified film of lacrimal fluid on the patient's eye and a specified radial flattening in the limbus region from a physiologically acceptable thermoplastic material, in which a negative impression of the patient's eye is produced by means of a flasking plaster,
the negative impression is filled with a mass which hardens to form a material which is dimensionally stable in the heat,
the limbus region of the positive impression thus obtained is flattened off and
the contact optical element is formed by deep drawing the thermoplastic synthetic resin over the smoothened positive impression,
characterised in that prior to deep drawing,
a) the positive impression is impregnated with a lacquer which seals the pores, and
b) the positive impression is then smoothened and a polishable lacquer layer about 5 to 150 µm in thickness is applied so as to flatten the radii in the region corresponding to the limbus, and
c) the layer of lacquer is polished.

2. Process according to claim 1, characterised in that in a further step carried out prior to deep drawing,
d) the corrected and polished positive impression is lined with a moulding compound which is dimensionally stable in the heat.

3. Process according to claim 1 or 2, characterized in that the thickness of the blank for the scleral lens is from 0,2 to 0,5 mm.

4. Process according to claims 1 to 3, characterised in that after deep drawing, a layer of plastics material is applied to the outer surface of the scleral lens blank for shaping the optically active region of the leans.

5. Process according to claim 4, characterized in that a moulded body whose internal radius corresponds to the external radius of the scleral lens blank is cemented on.

6. Process according to claim 5, characterised in that the moulded body is a completely formed lens, preferably a contact lens.

7. Process according to claims 4 to 6, characterised in that an iris structure is provided between the external surface of the scleral lens blank and the layer of plastics applied thereto.

## Revendications

1. Procédé pour la fabrication d'éléments optiques de contact, en particulier de lentilles sclérales (verres scléraux), qui possèdent sur l'oeil du sujet un film lacrymal défini et une augmentation définie des rayons dans la zone du limbe, d'une matière synthétique thermoplastique qui est physiologiquement tolérée, selon lequel
- on prend une empreinte négative de l'oeil du sujet au moyen d'une matière pour empreintes,
- on coule dans l'empreinte négative une matière qui se transforme en durcissant en une matière de forme stable à la chaleur,
- on aplanit la zone du limbe du moulage positif ainsi obtenu et
- on forme l'élément optique de contact par emboutissage de la matière synthétique thermoplastique sur le moulage positif lissé,
caractérisé en ce que, avant l'emboutissage,
a) on imbibe le moulage positif d'un vernis obturant les pores,
b) on lisse le moulage positif et on applique une couche de vernis d'une épaisseur d'environ 5-150 µm, avec augmentation des rayons dans la zone correspondant au limbe, et
c) on polit la couche de vernis.

2. Procédé selon la revendication 1, caractérisé en ce que, dans une autre opération précèdent l'emboutissage,
d) on réalise une copie du moulage positif corrigé et poli au moyen d'une matière de moulage de forme stable à la chaleur.

3. Procédé selon la revendication 1 ou 2, caractérisé en ce que l'épaisseur de l'ébauche de la lentille sclérale est de 0,2 à 0,5 mm.

4. Procédé selon les revendications 1 à 3, caractérisé en ce que, après l'emboutissage, on applique sur la face externe de l'ébauche de la lentille sclérale une couche de matière synthétique pour le façonnage de la zone optique active de la lentille.

5. Procédé selon la revendication 4, caractérisé en ce que l'on cimente sur l'ébauche de lentille une pièce moulée dont le rayon intérieur correspond au rayon extérieur de l'ébauche de lentille.

6. Procédé selon la revendication 5, caractérisé en ce que la pièce moulée est une lentille entièrement finie, de préférence une lentille de contact cornéenne.

7. Procédé selon les revendications 4 à 6, caractérisé en ce que l'on prévoit une structure d'iris entre la face externe de l'ébauche de la lentille sclérale et une couche de matière synthétique rapportée.

FIG. 1

FIG.2

FIG. 3